(19) Europäisches Patentamt
European Patent Office
Office européen des brevets

(11) EP 1 586 759 A2

(12) EUROPEAN PATENT APPLICATION

(43) Date of publication:
19.10.2005 Bulletin 2005/42

(51) Int Cl.$^7$: F02D 41/06, F02N 11/08

(21) Application number: 05006135.7

(22) Date of filing: 21.03.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 24.03.2004 JP 2004087160

(71) Applicant: Toyota Jidosha Kabushiki Kaisha
Toyota-shi, Aichi-ken 471-8571 (JP)

(72) Inventors:
• Ichimoto, Kazuhiro
Toyota-shi Aichi-ken 471-8571 (JP)
• Harada, Osamu
Toyota-shi Aichi-ken 471-8571 (JP)
• Kobayashi, Yukio
Toyota-shi Aichi-ken 471-8571 (JP)

• Yamaguchi, Katsuhiko
Toyota-shi Aichi-ken 471-8571 (JP)
• Ando, Daigo
Toyota-shi Aichi-ken 471-8571 (JP)
• Nishigaki, Takahiro
Toyota-shi Aichi-ken 471-8571 (JP)
• Ando, Ikuo
Toyota-shi Aichi-ken 471-8571 (JP)
• Hasegawa, Keiko
Toyota-shi Aichi-ken 471-8571 (JP)
• Tomatsuri, Mamoru
Toyota-shi Aichi-ken 471-8571 (JP)

(74) Representative: Kuhnen & Wacker
Patent- und Rechtsanwaltsbüro
Prinz-Ludwig-Strasse 40A
85354 Freising (DE)

(54) **Control system and method for an internal combustion engine**

(57) The temperature of a component (126; 132; 134) provided in or associated with an internal combustion engine (22) is estimated with no regard to the automatic stop and the automatic start of the internal combustion engine (22), and at least one of the estimated temperature of the component (126; 132; 134) and a parameter used to estimate the same temperature is initialized in response to the internal combustion engine (22) being started non-automatically.

FIG. 3

**Description**

BACKGROUND OF THE INVENTION

1. Field of the Invention

The present invention relates to a system and method that control the operation of an internal combustion engine that is mounted in a motor vehicle and automatically stopped and started (restarted) under given conditions, and the present invention also relates to a vehicle including the same system.

2. Description of the Related Art

A known system calculates the temperature of a catalyst of an exhaust purification system based on the intake amount and the engine speed (See JP-A 2002-180971). More specifically, this system first obtains a base catalyst temperature from a two-dimensional map based on the intake amount and the engine speed, and calculates a catalyst temperature by multiplying the base catalyst temperature with a temperature coefficient corresponding to a retarded ignition timing and integrating the obtained product by a particular coefficient. If the catalyst temperature thus calculated is below a target catalyst temperature, the system increasingly executes an ignition timing retarding control that rises the exhaust gas temperature effectively, in order to accelerate the warming up of the catalyst in the exhaust purification system.

However, the above-described system involves the following problem, for example. Since the catalyst temperature is calculated through integration and so the result always depends on the time after the engine started, if the engine is used in a vehicle that performs an "engine idling stop" operation or that also includes a motor as another driving power source and performs an intermittent operation of the engine, the catalyst temperature is reset to an initial value every time the engine is automatically stopped, and it is therefore considered that the catalyst temperature is not calculated properly in many cases. Note that such a problem may be caused with various control values obtained in association with the time after an engine start.

SUMMARY OF THE INVENTION

In view of the problem aforementioned, it is one object of the invention to provide a control system and method that enable proper operation of an internal combustion engine by calculating the temperature of a component provided in or associated with an internal combustion engine with no regard to an automatic stop and start of the internal combustion engine.

To achieve the foregoing object, a first aspect of the invention relates to a control system, including an internal combustion engine that is automatically stopped in response to an automatic stop condition being satisfied and is automatically started in response to an automatic start condition being satisfied; and a controller that estimates a temperature of a component provided in or associated with the internal combustion engine based on an operating state of the internal combustion engine and controls the internal combustion engine based on the estimated temperature of the component. The estimation of the temperature of the component by the controller includes estimating the temperature of the component with no regard to the automatic stop and the automatic start of the internal combustion engine and initializing at least one of the estimated temperature of the component or a parameter used to estimate said temperature in response to the internal combustion engine being started non-automatically.

According to this control system, because the temperature of the component is estimated with no regard to the automatic stop and start of the internal combustion engine, the estimation is made more reliable and precise, which results in more appropriate operation of internal combustion engine. Also, at lease one of the estimated temperature of the component and a parameter used in the estimation of said temperature is initialized when the internal combustion engine is started non-automatically, which results in a further improvement in the reliability and precision in the estimation of the temperature of the component.

In the foregoing control system, the component may be an exhaust purification device provided in an exhaust system of the internal combustion engine, and the temperature estimated by the controller may be a temperature of a catalyst provided in the exhaust purification device, or the component may be a fuel injection valve provided in the internal combustion engine and the temperature estimated by the controller may be a temperature of a nose of the fuel injection valve. In the latter case, the internal combustion engine may be an internal combustion engine configured to inject a fuel into a cylinder directly. Likewise, the component may be a piston provided in the internal combustion engine and the temperature estimated by the controller be a temperature of a top face of the piston, or the component may be a component forming an internal wall of a combustion chamber of the internal combustion engine and the temperature estimated by the controller be a temperature of the internal wall of the combustion chamber. In addition to these examples, the component may include various component provided in the internal combustion engine or associated therewith if appropriate.

Furthermore, in the foregoing control system, the estimation of the temperature of the component by the controller may include estimating the temperature of the component based on a state quantity associated with the operating state of the internal combustion engine, and in this case, the state quantity may include at least one of an intake charge rate of the internal combustion engine, an engine speed of the internal combustion engine, and a temperature of a coolant of the internal combustion engine.

Furthermore, the estimation of the temperature of the component by the controller may include determining the temperature of the component from the state quantity and correcting the determined temperature of the component using a mass flow rate of an intake air drawn into the internal combustion engine, and in this case, the correction of the determined temperature of the component may include modulating the determined temperature of the component using the mass flow rate of the intake air.

A second aspect of the invention relates to a vehicle the control system described above, which provides the same advantages and effects stated above in conjunction with the control system.

In this vehicle, the automatic stop and the automatic start of the internal combustion engine may be an automatic stop and an automatic start of the internal combustion engine which are triggered by an engine idle stop control of the internal combustion engine, and a drive motor for producing a force to drive the vehicle may be provided and the automatic stop and the automatic start of the internal combustion engine may be an automatic stop and an automatic start of the internal combustion engine which are triggered during an intermittent operation of the internal combustion engine associated with the operation of the drive motor.

A third aspect of the invention relates to a method for controlling an internal combustion engine that is automatically stopped in response to an automatic stop condition being satisfied and is automatically started in response to an automatic start condition being satisfied, wherein a temperature of a component provided in or associated with the internal combustion engine is estimated based on an operating state of the internal combustion engine with no regard to the automatic stop and the automatic start of the internal combustion engine and the internal combustion engine is controlled based on the estimated temperature of the component, and at least one of the estimated temperature of the component or a parameter used to estimate said temperature is initialized in response to the internal combustion engine being started non-automatically.

BRIEF DESCRIPTION OF THE DRAWINGS

The foregoing and/or further objects, features and advantages of the invention will become more apparent from the following description of exemplary embodiment with reference to the accompanying drawings, in which like numerals are used to represent like elements and wherein:

FIG. 1 is a view schematically showing the configuration of a hybrid vehicle 20 incorporating a control system according to one exemplary embodiment of the invention;

FIG. 2 is a view schematically showing the configuration of an engine 22 mounted in the hybrid vehicle 20;

FIG. 3 is a flowchart showing a temperature estimation routine that is repeatedly executed by an engine ECU 24 provided in the hybrid vehicle 20; and

FIG.4 is a graph representing one exemplary relationship among temporal estimate values Ttmp 1 to Ttmp 4, intake rate kl, engine speed Ne, and coolant temperature Tw.

DETAILED DESCRIPTION OF THE EXEMPLARY EMBODIMENTS

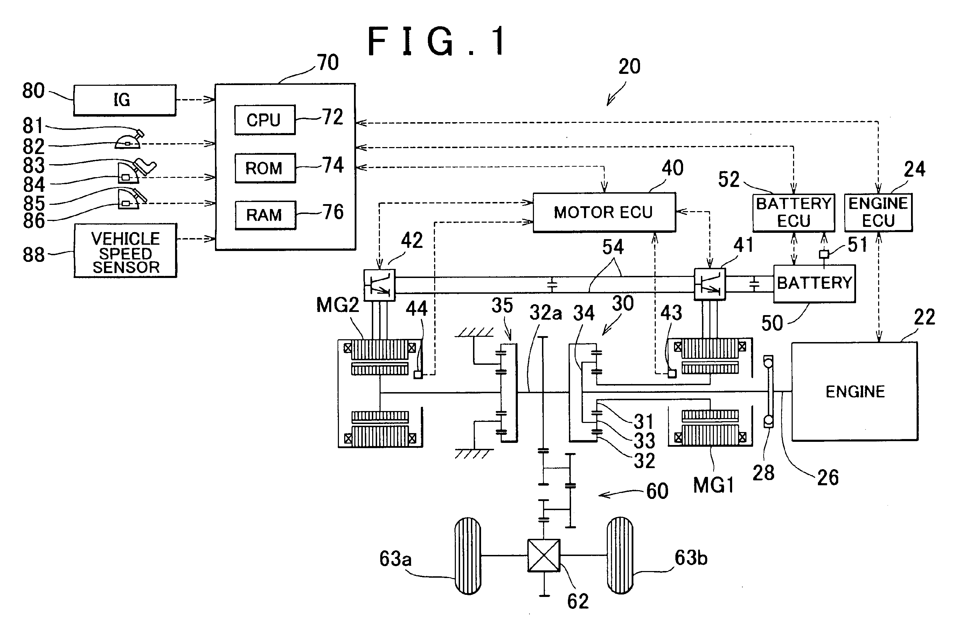

Hereinafter, one exemplary embodiment of the invention will be described with reference to the accompanying drawings. FIG. 1 schematically shows the configuration of a hybrid vehicle 20 incorporating a control system according to the embodiment. Referring to FIG. 1, the hybrid vehicle 20 includes an engine 22, a three-shaft type driving power distribution mechanism 30 that is connected to a crank shaft 26 of the engine 22 via a damper 28, a motor MG1 that is connected to the power distribution mechanism 30 and is driven to generate electric power under given conditions, a reduction gear unit 35 connected to a ring gear shaft 32a which is a drive shaft of the power distribution mechanism 30, a motor MG2 that is connected to the reduction gear unit 35, an hybrid ECU 70 that controls the entire operation of the hybrid vehicle 20, and so on.

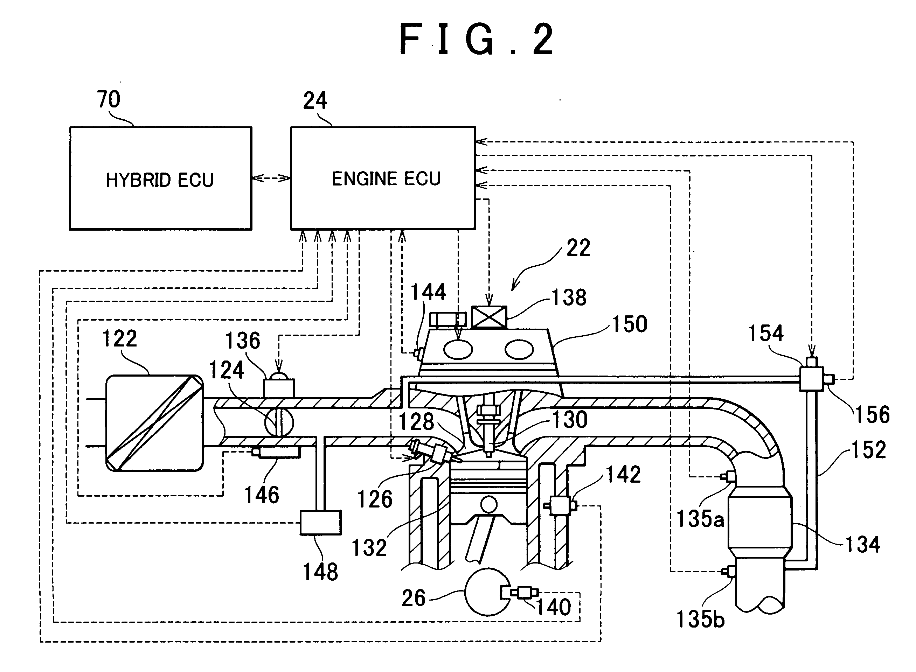

The engine 22 uses a hydrocarbon fuel including, but not limited to, gasoline and diesel fuel and operates by injecting the fuel into each cylinder directly. More specifically, referring to FIG. 2, intake air is first filtered by an air cleaner 122 and drawn into a combustion chamber through a throttle valve 124 and an intake valve 128. Fuel is then injected into the combustion chamber directly from an fuel injection valve 126 at a particular timing during an intake stroke or a compression stroke of a piston 132, and the injected fuel is then ignited by an electric spark produced by an ignition plug 130. Using the energy of such fuel combustion, the piston 132 reciprocates up and down and this reciprocating movement of each piston 132 is converted into a rotational movement by the crank shaft 26. When the engine 22 is running, exhaust gas is continuously discharged to the outside through an exhaust gas purification device (three-way catalyst) 134 which removes harmful substances contained in the exhaust gas, such as carbon oxide (CO), hydro carbon (HC), and nitrogen oxide (NOx). An EGR pipe 152 is connected to the downstream side of the exhaust gas purification device 134 to return the exhaust gas to the intake side so that the returned exhaust gas, which is non-combustible gas, is mixed with fuel and intake air to provide an air-fuel mixture in the combustion chamber.

An engine ECU 24 is provided to control the operation of the engine 22. The engine ECU 24 receives, via an intake port thereof, various sensor signals used to determine the operating state of the engine 22. The sensor signals include (a) a signal from a crank position sensor 140 which indicates the rotational position of the crank shaft 26, (b) a signal from a coolant temperature sensor 142 which indicates the temperature of a coolant of the engine 22 (coolant temperature TW), (c) a signal from a cam position sensor 144 which indicates the rotational position of a cam shaft driven to open and close the intake and exhaust valves, (d) a signal from a throttle valve position sensor 146 which indicates the position of the throttle valve 124, (e) a signal from a vacuum sensor 148 which indicates the amount of an intake air that represents the load on the engine 22, (f) a signal from an air-fuel ratio sensor 135a provided in a portion of the exhaust passage upstream of the exhaust gas purification device 134 (i.e., in the combustion chamber side), (g) a signal from an oxygen sensor 135 provided in a portion of the exhaust passage downstream of the exhaust gas purification device 134, and (h) a signal from a fuel pressure sensor (not shown) provided in a delivery pipe for supplying fuel to each fuel injection valve. The engine ECU 24 in turn outputs, via its output port, control signals for various components and devices of the engine 22, including the fuel injection valve 126, a throttle motor 136 for driving the throttle valve 124, an ignition coil 138 incorporated in the ignition plug 130, and a variable valve timing mechanism 150 that changes the opening and closing timings of the intake valve 128. The ECU 24 has a communication line to the hybrid ECU 70, and controls the operation of the engine 22 according to control signals from the hybrid ECU 70, and transmits the information indicating the operation state of the engine 22 to the hybrid ECU 70 when necessary.

The power distribution mechanism 30 has a planetary gear mechanism including a sun gear 31, a ring gear 32 having internal-tooth and being concentric with the sun gear 31, a plurality of pinions 33 meshed with the sun gear 31 and the ring gear 32 therebetween, and a carrier 34 on which the pinions 33 are fixed such that each pinion 33 can freely rotate on its axis and revolve about the sun gear 31. The power distribution mechanism 30 thus constructed enables differential transmission of driving power through the sun gear 31, the ring gear 32, and the carrier 34 as its rotational elements. The carrier 34 is connected to the crank shaft 26 of the engine 22, the sun gear 31 is connected to the motor MG1, and the ring gear 32 is connected to the reduction gear unit 35 via the ring gear shaft 32a. When the motor MG1 is driven to generate electric power, driving power is input to the power distribution mechanism 30 from the engine 22 via the carrier 34 and distributed to the sun gear 31 side and the ring gear 32 side, respectively, according to their gear ratios. Meanwhile, when the motor MG1 operates as a motor, the driving power input from the motor MG 1 via the sun gear 31 and the driving power input from the engine 22 via the carrier 34 are combined and output to the ring gear 32 side. In either case, the driving power input to the ring gear 32 is transmitted to wheels 63a, 63b of the vehicle through the ring gear shaft 32a, a gear mechanism 60, and a differential gear unit 62.

The motors MG1 and MG2 have the structure of a known synchronous motor-generator that operates as both a motor to produce a driving power and a generator driven to generate electric power, and the motors MG1 and MG2 are supplied with electric power from and provide their generated electric power to a battery 50 via inverters 41 and 42. The operation of the motor MG1 and the motor MG2 is controlled by a motor ECU 40. The motor ECU 40 receives various signals that are used to control the motors MG1 and MG2, such as signals from rotational position sensors 43, 44 which indicate the rotational position of the rotor of each motor and a signal from a current sensor, not shown, which indicates a phase current applied to the motors MG1 and MG2. The motor ECU 40 in turn outputs control signals for switching the operation of the inverters 41, 42. The motor ECU 40 has a communication line to the hybrid ECU 70, and controls the operation of the motors MG1 and MG2 according to the controls signals from the hybrid ECU 70, and transmits the information indicating the operation state of the motors MG1 and MG2 to the hybrid ECU 70 when necessary.

A battery ECU 52 is provided to monitor the state of the battery 50. The battery ECU 52 receives various sensor signals including a signal from a voltage sensor provided between terminals of the battery 50 which indicates the voltage between the same terminals, a signal from a current sensor, not shown, provided on a power line 54 connected to an output terminal of the battery 50 which indicates the discharge current of the battery 50, and a signal from a temperature sensor 51 provided on the battery 50 which indicates the temperature of the battery 50 (battery temperature Tb). Using such sensor signals, the battery ECU 52 determines the state of the battery 50, and when necessary, outputs data indicating the battery state to the hybrid ECU 70. Meanwhile, the battery ECU 52 determines the SOC (State Of Charge) of the battery 50 by integrating the discharge current detected by the current sensor.

The hybrid ECU 70 is a microcomputer device including a CPU 72 as its central component, a ROM 74 storing various programs, a RAM for temporarily storing various data, an input port, an output port, and a communication port, none of these ports being shown in the drawings. The hybrid ECU 70 receives, via the input port, an ignition signal from an ignition switch 80, a signal from a shift position sensor 82 which indicates the position of a shift lever 81 (shift position SP), a signal from an accelerator pedal position sensor 84 which indicates the depression of an accelerator pedal 83 (accelerator opening Acc), a signal from a brake pedal position sensor 86 which indicates the depression of a brake pedal 85 (brake pedal position BP), and a signal from a vehicle speed sensor 88 which indicates the vehicle speed (vehicle speed V). Meanwhile, as aforementioned, the hybrid ECU 70 is connected through the communication port to the engine ECU 24, the motor ECU 40, and the battery ECU 52 and transmits various control signals to and receive various data from them.

In the hybrid vehicle 20 constructed as described above, target output torque, i.e., torque required to be output to the ring gear shaft 32a, is determined based on the accelerator opening Acc, i.e., the amount the accelerator pedal 83 is depressed by a driver, and the vehicle speed V, and the engine 22 and the motors MG1/MG2 are controlled such that the target output torque is output to the ring gear shaft 32a. To implement this, the hybrid vehicle 20 selectively activates several drive modes using the engine 22, the motor MG1, and the motor MG2 in various combinations, such as a torque conversion drive mode, a battery charge-discharge drive mode, and a motor drive mode. In the torque conversion drive mode, the output of the engine 22 is entirely transmitted to the ring gear shaft 32a through torque conversion by the power distribution mechanism 30 and the motors MG1 and the MG2 while controlling the motors MG1 and MG2 appropriately. In the battery charge-discharge drive mode, the engine is driven such that its output becomes equal to the sum of a value corresponding to the target torque at the ring gear shaft 32a and a value corresponding to electric power to recharge the battery 50 or to be discharged from the battery 50 so that the output of the engine 22 is partially or entirely transmitted to the ring gear shaft 32a through torque conversion by the power distribution mechanism 30 and the motors MG1 and MG2 while controlling the motors MG1 and MG2 appropriately. In the motor drive mode, the motor MG2 is driven to produce the target output torque at the ring gear shaft 32a while the engine 22 is stopped. Specifically, when a prescribed automatic engine stop condition associated with the accelerator opening Acc, and the vehicle speed V, and the SOC of the battery 50 is satisfied, the engine 22 is automatically stopped to activate the motor drive mode. Meanwhile, when a prescribed automatic engine start condition associated with the same values is satisfied, the engine 22 is automatically restarted to activate the torque conversion drive mode or the battery charge/discharge drive mode.

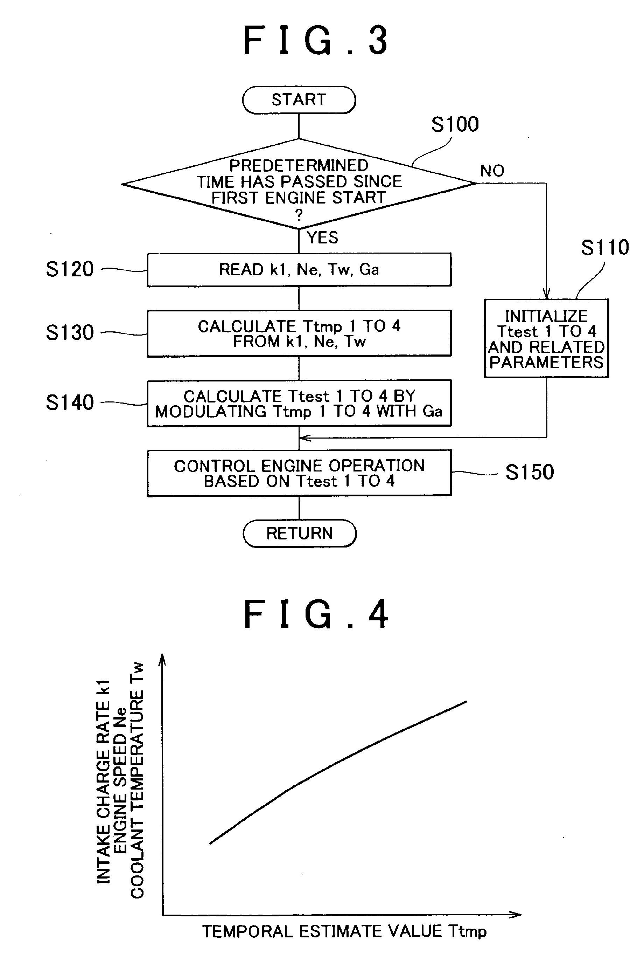

Next, the operation for estimating the temperature of particular components of the engine 22 and the temperature of particular components associated with the engine 22 will be described. FIG. 3 is a flowchart showing a temperature estimation routine that is repeatedly executed by the engine ECU 24 at particular intervals of time (e.g., 100msc) to estimate the temperature of a catalyst provided in the exhaust gas purification device 134, the temperature of the nose of the fuel injection valve 126, the temperature of an internal wall of the combustion chamber, and the temperature of the top face of a piston 132.

When this routine starts, the engine ECU 24 first determines in step 100 whether a predetermine period of time has passed since the engine 22 was first started after the activation of the hybrid vehicle 20. This period of time is long enough for the engine 22 to be started (e.g., several seconds). If "NO" in step 100, the engine ECU 24 proceeds to step 110 and initializes estimate values Test 1 to Test 4 which are estimated values of the temperature of the catalyst of the exhaust gas purification device 134, the temperature of the nose of the fuel injection valve 126, the temperature of the combustion chamber wall, and the temperature of the top face of the piston 132, respectively, and resets other related parameters. Subsequently, the engine ECU 24 proceeds to step 150 and performs a particular control, such as acceleration of the warming up of the engine 22, based on the initialized estimate values Test 1 to Test 4 of the respective temperatures, after which the routine ends.

If "YES" in step 100, conversely, the engine ECU 24 proceeds to step 120 and reads an intake charge rate kl, an engine speed Ne, the coolant temperature Tw detected by the coolant temperature sensor 142, an intake flow rate Ga. The intake rate kl may be obtained from the intake amount detected by the vacuum sensor 148, the engine speed Ne may be obtained from the crank position detected by the crank positions sensor 140, and the intake flow rate Ga may be determined as a mass flow rate of an intake air that can be obtained from the intake amount detected by the vacuum sensor 148 and the intake temperature detected by an intake temperature sensor provided in the air cleaner 122, not shown.

In step 130, the engine ECU 24 calculates temporal estimate values Ttemp 1 to 4 of the temperature of the catalyst of the exhaust gas purification device 134, the temperature of the nose of the fuel injection valve 126, the temperature of the combustion chamber wall, and the temperature of the top face of the piston 132, based on the intake charge rate kl, the engine speed Ne, and the coolant temperature Tw. The temporal estimate values Ttemp 1 to 4 tend to increase as each of the intake rate kl, the engine speed Ne, and the coolant temperature Tw increases. According to this embodiment, the temporal estimate values Ttmp 1 to Ttmp 4 are calculated by applying the intake rate kl, the engine speed Ne, and the coolant temperature Tw to a prestored map representing a relationship among the temporal estimate values Ttmp 1 to Ttmp 4, the intake rate kl, the engine speed Ne, and the coolant temperature Tw, which has been determined in advance by an experiment, or the like. FIG. 4 shows one example of said relationship.

Next, in step 140, the engine ECU 24 calculates the estimate values Test 1 to Test 4 by moderating the temporal estimate values Ttmp 1 to Ttmp 4 using the intake flow rate Ga. Typically, this modulation may be implemented according to an expression indicated

below;

$$Test = *Test - (Tmap - *Test)/tga$$

where *Test represents the value of Test obtained in the last cycle, and Tmap represents a steady-state temperature determined according to particular present conditions using a map which has been determined by an experiment, or the like, and tga is a moderating coefficient determined from a map using the intake flow rate Ga as an argument. By such modulation of the temporal estimate values Ttmp 1 to Ttmp 4, the estimate values Test 1 to Test 4 are properly calculated even when the engine 22 in an automatically stopped state is driven together with the motor MG1 and/or the motor MG2 to apply an engine brake or when the engine 22 is cranked to automatically start, for example.

Next, in step 150, the engine ECU 24 performs a particular control based on the calculated estimate values Test 1 to Test 4, such as acceleration of the warming up of the engine 22 by retarding an ignition timing and prevention of engine overheating due to excess supply of fuel, after which the routine ends.

Accordingly, in the hybrid vehicle 20, since the estimated values Test 1 to 4 are calculated from the intake rate kl, the engine speed Ne, the coolant temperature Tw and the intake flow rate Ga without being initialized in response to the engine 22 being automatically stopped, the operation of the engine 22 is properly controlled which results in various advantages such as reduced harmful exhaust emissions, improved fuel economy, improved durability of components of the engine 22 (e.g., the exhaust gas purification device 134).

While the estimate values Test 1 to Test 4 of the temperature of the catalyst of the exhaust gas purification device 134, the temperature of the nose of the fuel injection valve 126, the temperature of the combustion chamber wall, and the temperature of the top face of the piston 132 have been calculated from the intake rate kl, the engine speed Ne, the coolant temperature Tw, and the intake flow rate Ga in the hybrid vehicle 20 of the above-described embodiment, the temperature of other component of the engine 22 or other component associated with the engine 22 may be calculated from the intake rate kl, the engine speed Ne, the coolant temperature Tw, and the intake flow rate Ga.

While the invention has been applied to the engine 22 in the above-described exemplary embodiment, it may alternatively be applied to other hybrid or non-hybrid vehicle including an engine that is automatically stopped under a particular automatic stop condition and restarted under a particular automatic start condition. For example, the invention may be applied to a non-motor-driven vehicle that only includes a gasoline engine as a driving power source and performs an engine idling stop operation in which the engine is automatically stopped and restarted. More importantly, the invention may be applied to a system other than a vehicle if it includes an engine that is automatically stopped and restarted.

While the invention has been described with reference to exemplary embodiments thereof, it is to be understood that the invention is not limited to the exemplary embodiments or constructions. To the contrary, the invention is intended to cover various modifications and equivalent arrangements other than described above. In addition, while the various elements of the exemplary embodiments are shown in various combinations and configurations, which are exemplary, other combinations and configurations, including more, less or only a single element, are also within the spirit and scope of the invention.

**Claims**

1. A control system including an internal combustion engine (22) that is automatically stopped in response to an automatic stop condition being satisfied and is automatically started in response to an automatic start condition being satisfied, and a controller (24) that estimates a temperature of a component (126; 132; 134) provided in or associated with the internal combustion engine (22) based on an operating state of the internal combustion engine (22) and controls the internal combustion engine (22) based on the estimated temperature of the component (126; 132; 134), the control system being
**characterized in that**:

   the estimation of the temperature of the component (126; 132; 134) by the controller (24) includes estimating the temperature of the component (126; 132; 134) with no regard to the automatic stop and the automatic start of the internal combustion engine (22) and initializing at least one of the estimated temperature of the component (126; 132; 134) and a parameter used to estimate said temperature in response to the internal combustion engine (22) being started non-automatically.

2. A control system according to claim 1, wherein

   the component (126; 132; 134) includes an exhaust purification device (134) provided in an exhaust system of the internal combustion engine (22); and
   the temperature estimated by the controller (24) includes a temperature of a catalyst provided in the exhaust purification device (134).

3. A control system according to claim 1, wherein

the component (126; 132; 134) includes a fuel injection valve (126) provided in the internal combustion engine (22); and
the temperature estimated by the controller (24) includes a temperature of a nose of the fuel injection valve (126).

4. A control system according to claim 3, wherein the internal combustion engine (22) is configured to inject a fuel into a cylinder directly.

5. A control system according to claim 1, wherein

the component (126; 132; 134) includes a piston (132) provided in the internal combustion engine (22); and
the temperature estimated by the controller (24) includes a temperature of a top face of the piston (132).

6. A control system according to claim 1, wherein

the component (126; 132; 134) includes a component forming an internal wall of a combustion chamber of the internal combustion engine (22); and
the temperature estimated by the controller (24) includes a temperature of the internal wall of the combustion chamber.

7. A control system according to any one of claims 1 to 6, wherein
the estimation of the temperature of the component (126; 132; 134) by the controller (24) includes estimating the temperature of the component (126; 132; 134) based on a state quantity associated with the operating state of the internal combustion engine (22).

8. A control system according to claim 7, wherein the state quantity includes at least one of an intake charge rate of the internal combustion engine (22), an engine speed of the internal combustion engine (22), and a temperature of a coolant of the internal combustion engine (22).

9. A control system according to claim 8, wherein the estimation of the temperature of the component (126; 132; 134) by the controller (24) includes determining the temperature of the component (126; 132; 134) from the state quantity and correcting the determined temperature of the component (126; 132; 134) using a mass flow rate of an intake air drawn into the internal combustion engine (22).

10. A control system according to claim 9, wherein the correction of the determined temperature of the component (126; 132; 134) includes modulating the determined temperature of the component (126; 132; 134) using the mass flow rate of the intake air.

11. A vehicle, **characterized by** comprising a control system according to any one of claims 1 to 10.

12. A vehicle according to claim 11, wherein
the automatic stop and the automatic start of the internal combustion engine (22) include an automatic stop and an automatic start of the internal combustion engine (22) which are triggered by an engine idle stop control of the internal combustion engine (22).

13. A vehicle according to claim 11, wherein

a drive motor for producing a force to drive the vehicle is provided; and
the automatic stop and the automatic start of the internal combustion engine (22) include an automatic stop and an automatic start of the internal combustion engine (22) which are triggered during an intermittent operation of the internal combustion engine (22) associated with the operation of the drive motor.

14. A method for controlling an internal combustion engine (22) that is automatically stopped in response to an automatic stop condition being satisfied and is automatically started in response to an automatic start condition being satisfied, the method estimating a temperature of a component (126; 132; 134) provided in or associated with the internal combustion engine (22) based on an operating state of the internal combustion engine (22) and controlling the internal combustion engine (22) based on the estimated temperature of the component (126; 132; 134), the method being **characterized in that**:

the estimation of the temperature of the component (126; 132; 134) is made with no regard to the automatic stop and the automatic start of the internal combustion engine (22); and
at least one of the estimated temperature of the component (126; 132; 134) and a parameter used to estimate said temperature is initialized in response to the internal combustion engine (22) being started non-automatically.

15. A method according to claim 14, wherein
the estimation of the temperature of the component (126; 132; 134) includes estimating a temperature of a catalyst of an exhaust purification device provided in an exhaust system of the internal combustion engine (22).

16. A method according to claim 14, wherein
the estimation of the temperature of the component (126; 132; 134) includes estimating a temperature of a nose of a fuel injection valve (126) provided in the internal combustion engine (22).

17. A method according to claim 16, wherein the internal combustion engine (22) is configured to inject a fuel into a cylinder directly.

18. A method according to claim 14, wherein the estimation of the temperature of the component (126; 132; 134) includes estimating a temperature of a top face of a piston (132) provided in the internal combustion engine (22).

19. A method according to claim 14, wherein the estimation of the temperature of the component (126; 132; 134) includes estimating a temperature of an internal wall of an combustion chamber of the internal combustion engine (22).

20. A method to any one of claims 14 to 19, wherein the estimation of the temperature of the component (126; 132; 134) includes estimating the temperature of the component (126; 132; 134) based on a state quantity associated with the operating state of the internal combustion engine (22).

21. A method according to claim 20, wherein the state quantity includes at least one of an intake charge rate of the internal combustion engine (22), an engine speed of the internal combustion engine (22), and a temperature of a coolant of the internal combustion engine (22).

22. A method according to claim 21, wherein the estimation of the temperature of the component (126; 132; 134) includes determining the temperature of the component (126; 132; 134) from the state quantity and correcting the determined temperature of the component (126; 132; 134) using a mass flow rate of an intake air drawn into the internal combustion engine (22).

23. A method according to claim 22, wherein the correction of the determined temperature of the component (126; 132; 134) includes modulating the determined temperature of the component (126; 132; 134) using the mass flow rate of the intake air.

24. A control system including an internal combustion engine (22) that is automatically stopped in response to an automatic stop condition being satisfied and is automatically started in response to an automatic start condition being satisfied, and controlling means (24) for estimating a temperature of a component (126; 132; 134) provided in or associated with the internal combustion engine (22) based on an operating state of the internal combustion engine (22) and controlling the internal combustion engine (22) based on the estimated temperature of the component (126; 132; 134), the control system being **characterized in that**:

the estimation of the temperature of the component (126; 132; 134) by the controlling means (24) includes estimating the temperature of the component (126; 132; 134) with no regard to the automatic stop and the automatic start of the internal combustion engine (22) and initializing at least one of the estimated temperature of the component (126; 132; 134) and a parameter used to estimate said temperature in response to the internal combustion engine (22) being started non-automatically.

25. A method for controlling an internal combustion engine (22) that is automatically stopped in response to an automatic stop condition being satisfied and is automatically started in response to an automatic start condition being satisfied, the method estimating a temperature of a component (126; 132; 134) provided in or associated with the internal combustion engine (22) based on an operating state of the internal combustion engine (22) and controlling the internal combustion engine (22) based on the estimated temperature of the component (126; 132; 134), the method being **characterized in that**:

the estimation of the temperature of the component (126; 132; 134) is made with no regard to the automatic stop and the automatic start of the internal combustion engine (22); and at least one of the estimated temperature of the component (126; 132; 134) and a parameter used to estimate said temperature is initialized when the internal combustion engine (22) is started non-automatically, and the estimation of the temperature of the component (126; 132; 134) is continued when the internal combustion engine (22) is stopped or started automatically.

FIG.1

EP 1 586 759 A2

# F I G . 2

EP 1 586 759 A2

# F I G . 3

```
        START
          |
         S100
   ┌──────────────┐
   │ PREDETERMINED│ ──NO──┐
   │TIME HAS PASSED│      │
   │  FIRST ENGINE │      │
   │    START ?    │      │
   └──────────────┘      │
         YES             │
          |              │
   READ k1, Ne, Tw, Ga   │   S110
    (S120)               │    │
          |              │  INITIALIZE
   CALCULATE Ttmp 1 TO 4 │  Ttest 1 TO 4
   FROM k1, Ne, Tw       │  AND RELATED
    (S130)               │  PARAMETERS
          |              │
   CALCULATE Ttest 1 TO 4 BY
   MODULATING Ttmp 1 TO 4 WITH Ga
    (S140)               │
          |←─────────────┘
   CONTROL ENGINE OPERATION
   BASED ON Ttest 1 TO 4   S150
          |
        RETURN
```

# F I G . 4

Y-axis: INTAKE CHARGE RATE k1 ENGINE SPEED Ne COOLANT TEMPERATURE Tw

X-axis: TEMPORAL ESTIMATE VALUE Ttmp

11